(19) Europäisches Patentamt
European Patent Office
Office européen des brevets

(11) Veröffentlichungsnummer : **0 493 310 A1**

(12) **EUROPÄISCHE PATENTANMELDUNG**

(21) Anmeldenummer : **91810867.1**

(22) Anmeldetag : **11.11.91**

(51) Int. Cl.$^5$ : **C08K 5/00**, C08K 5/09, C08L 61/34

(30) Priorität : **21.12.90 CH 4106/90**

(43) Veröffentlichungstag der Anmeldung : **01.07.92 Patentblatt 92/27**

(84) Benannte Vertragsstaaten : **AT BE CH DE ES FR GB IT LI NL SE**

(71) Anmelder : **Gurit-Essex AG**
**CH-8807 Freienbach (CH)**

(72) Erfinder : **Schreiber, Herbert**
**Seeblick 3**
**CH-8832 Wollerau (CH)**

(74) Vertreter : **Rottmann, Maximilian R.**
**c/o Rottmann, Zimmermann + Partner AG**
**Glattalstrasse 37**
**CH-8052 Zürich (CH)**

(54) **Zu schwerentflammbaren Kunststoffen härtbare Harzmischungen und deren Verwendung.**

(57) Durch Härtung von Harzmischungen, welche enthalten :
— eine Harzkomponente, welche mindestens ein thermisch härtbares Oxazenharz enthält oder aus einer solchen besteht ;
— eine organische Metall- bzw. Halbmetall-Verbindung oder Kohlenmonoxid-Komplexverbindung eines Elementes der 6., 7. oder 8. Nebengruppe des periodischen Systems oder des Kupfers, Antimons oder Wismuts ; und
— gegebenenfalls Verstärkungsfasern und/oder Füllstoffe, erhält man schwerentflammbare Kunststoffe.

EP 0 493 310 A1

Die Erfindung betrifft:

– zu schwerentflammbaren Kunststoffen härtbare Harzmischungen, wie sie in den Ansprüchen 1 bis 19 umschrieben sind;

– Verfahren zur Herstellung von schwerentflammbaren Kunststoffen unter Verwendung dieser Harzmischungen, wie sie in den Ansprüchen 20 bis 23 umschrieben sind;

– die Anwendung dieser Verfahren zur Herstellung von schwerentflammbaren Kunststoffartikeln, wie sie in Anspruch 24 umschrieben ist;

– schwerentflammbare Kunststoffartikel, wie sie in den Ansprüchen 25 und 26 umschrieben sind; und

– Mittel zur Ausführung dieser Verfahren, wie sie in den Ansprüchen 27 und 28 umschrieben sind.

Die bis heute eingesetzten oder beschriebenen schwerentflammbaren Kunststoffe sind alle mit wesentlichen Nachteilen behaftet. Halogenhaltige Kunststoffe sind zwar selbstlöschend, entwickeln aber bei Brandeinwirkung hochgiftige und korrosive Rauchgase oder spalten sogar schon bei der Herstellung giftige Substanzen ab. Auch der Einsatz von anderen Flammschutzadditiven führte bisher nicht zu befriedigenden Ergebnissen. Entweder werden diese in so grossen Mengen benötigt, dass die Eigenschaften beeinträchtigt werden oder die Verarbeitbarkeit in Frage gestellt ist, in manchen Fällen auch wegen ihrer thermischen Instabilität, oder sie sind wasserempfindlich oder toxisch nicht unbedenklich oder weisen andere Nachteile auf. Anderseits weisen Kunststoffe, welche weniger brennbar sind und daher geringere Zusätze benötigen, wie z.B. Phenolformaldehydharze, schon von Haus aus viele Nachteile auf, wie z.B. schlechtere mechanische und elektrische Eigenschaften. Bei der Härtung spalten diese Duroplaste flüchtige Produkte ab und sind daher für viele Verarbeitungsverfahren nicht geeignet. Schliesslich gibt es noch einige hochgezüchtete Kunststoffe, die wegen ihrer schwierigen Herstellung schon aus wirtschaftlichen Gründen für einen allgemeineren Einsatz nicht in Frage kommen.

Trotz grösster Anstrengungen ist es bisher noch nicht gelungen, einen schwerentflammbaren, toxisch unbedenklichen Kunststoff zu entwickeln, der alle übrigen Anforderungen bezüglich Eigenschaften, Verarbeitbarkeit und Wirtschaftlichkeit erfüllt und die halogenhaltigen System zu ersetzen vermöchte.

Erfindungsgemäss werden diese Probleme gelöst durch Harzmischungen und Kunststoffe auf der Basis von 1-Oxa-3-aza-tetralin-Gruppen enthaltenden Verbindungen mit einem Zusatz von bestimmten organischen Metall- bzw. Halbmetall-Verbindungen oder Metall- bzw. Halbmetall-Kohlenmonoxid-Komplexverbindungen wie sie in den Ansprüchen umschrieben sind.

1-Oxa-3-aza-tetralin-Gruppen enthaltende Verbindungen und deren Vorpolymere (im folgenden kurz "Oxazenharze" genannt) sind bekannt, z.B aus den CH-PS 574'978, 579'113 und 606'169 . Sie sind aus Phenolen durch Umsetzung mit einem Amin und Formaldehyd erhältlich, etwa gemäss der Gleichung A:

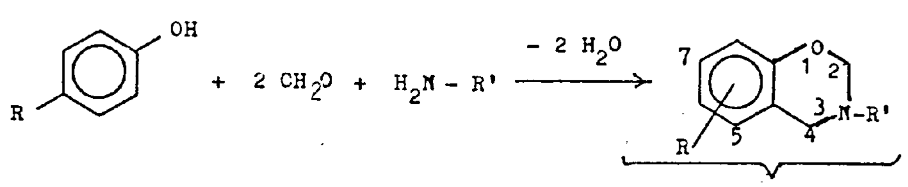


(A)

1-Oxa-3-aza-tetralin-Gruppe

R bedeutet beispielsweise Wasserstoff, Halogen, Alkyl oder Alkoxy. R′ bedeutet einen aliphatischen oder aromatischen Rest.

Sie können aber auch nach anderen zu gleichartigen Produkten führenden Verfahren gewonnen werden.

Im Gegensatz zu anderen bekannten Kondensationsreaktionen von Phenolen, Aminen und Formaldehyd werden bei dieser Reaktion phenolische OH-Gruppen verbraucht. Aus der analytischen Bestimmung dieser Gruppen im Reaktionsgemisch lässt sich somit gemäss Gleichung A die Menge der synthetisierten 1-Oxa-3-aza-tetralin-Gruppen ermitteln.

Es können dabei auch Vorpolymere der 1-Oxa-3-aza-tetralin-Verbindungen eingesetzt werden. Da die 1-Oxa-3-aza-tetralin-Gruppen bei der Polymerisation wegreagieren, können diese Vorpolymeren weniger 1-Oxa-3-aza-tetralin-Gruppen enthalten. Entscheidend ist auch hier, dass das intermediär gebildete oder hypothetische monomere Reaktionsprodukt 1-Oxa-3-aza-tetralin-Gruppen enthält. Dies ist für den Fachmann aus der Funktionalität leicht zu berechnen. Eine erfindungsgemäss einsetzbare 1-Oxa-3-aza-tetralin-Verbindung oder deren Vorpolymeres bildet sich z.B. dann, wenn sich die Molverhältnisse innerhalb der in der CH-PS

606'169 definierten Grenze halten.

Als Ausgangs- bzw. Grundstoffe für die 1-Oxa-3-aza-tetralin-Verbindung dienen Phenol oder Phenol-Derivate sowie Amine und Formaldehyd.

Bevorzugt werden dabei als 1-Oxa-3-aza-tetralin-Gruppen enthaltende Verbindungen solche, die sich formell von einem Phenol und einem Amin ableiten, von denen die eine Komponente mehr als monofunktionell ist.

Beispiele geeigneter Phenole sind:

– Einwertige Phenole, wie Phenol selbst, m- und p-Kresol, m- und p-Ethylphenol, m- und p-Isopropylphenol, m- und p-Isopropyloxyphenol, m- und p-Chlorphenol und beta-Naphthol. Dabei werden die meta-substituierten Phenole vorgezogen, weil bei ihnen keine reaktiven Stellen blockiert sind.

– Zweiwertige Phenole, wie 4,4'-Dihydroxy-diphenylmethan, 2,4'-Dihydroxy-diphenylmethan, 3,3'-Dihydroxy-diphenylmethan, 2,2-Bis-(4-hydroxyphenyl)- propan, 4,4'-Dihydroxy-stilben, Hydrochinon, Brenzkatechin und Resorcin.

– Niedrig kondensierte Phenol-Formaldehyd-Novolak-Harze, gegebenenfalls auch als Mischungen mit Phenol.

Beispiele besonders geeigneter Amine sind:

– Anilin, o-, m- und p-Phenylendiamin, Benzidin, 4,4'-Diaminodiphenyl-methan, 2,2-Bis-(aminophenyl)-propan, Cyclohexylamin, Ethylendiamin und Propylendiamin.

Besonders geeignet sind solche Phenole und Amine, welche keine oder nur wenig aliphatische Bausteine, also vorwiegend oder ausschliesslich aromatische Reste enthalten. Aus den genannten toxikologischen Gründen werden, wenn möglich, die halogenierten Derivate gemieden, obschon diese besonders schwer entflammbare Kunststoffe ergäben. Der besondere Vorteil der Erfindung ist es ja gerade, dass auf die Halogene verzichtet werden kann. Als besonders geeignet erwiesen sich einerseits Phenol, die Dihydroxydiphenylmethane, die Dihydroxybenzole und Novolake, anderseits Anilin, die Phenylendiamine und die Diaminodiphenylmethane.

Geeignete Metall- bzw. Halbmetall-Verbindungen für den erfindungsgemässen Einsatz sind organische Verbindungen der Elemente der 6., 7. oder 8. Nebengruppe des periodischen Systems sowie des Kupfers, Antimons und Wismuts. Besonders geeignet sind die Verbindungen der Elemente Kupfer, Chrom, Mangan, Eisen und Antimon.

Als organische Metall- bzw. Halbmetall-Verbindungen eignen sich insbesondere Verbindungen mit Metall- bzw. Halbmetall-Kohlenstoff-Bindungen, wie Alkyl-, Aryl-, Aralkyl-, Alkenyl- und Alkinyl-Verbindungen; Enolate, wie die Acetylacetonate; und die Metall- bzw. Halbmetall-Verbindungen des Acetessigesters.

Auch Verbindungen mit Metall- bzw. Halbmetall-Stickstoff-Bindungen oder Metall- bzw. Halbmetall-Phosphor-Bindungen sind geeignet, insbesondere Komplexverbindungen, wie die Porphine, Porphyrine und Phthalocyanine.

Die beste flammhemmende Wirkung zeigen die komplexen Metall-bzw. Halbmetall-Verbindungen der cyclischen konjugierten Polyene oder Polyenylreste mit nicht lokalisierten Elektronenpaaren, insbesondere die Cyclopentadienyl-Verbindungen, wobei die Cyclopentadienylreste auch substituiert oder teilweise durch andere komplexbildende organische Reste oder Kohlenmonoxid ersetzt sein können. Die bevorzugt eingesetzte Verbindung ist Ferrocen.

Ferrocen [Bis(eta-cyclopentadienyl)eisen] ist in der Literatur beschrieben als Rauchverminderer für an sich schwer, entflammbare Kunststoffe, wie z.B. PVC. Dieser Effekt beruht auf der Wirkung von Ferrocen als Oxydationskatalysator. So wird es auch als Verbrennungsförderer in Kraftstoffen eingesetzt. Der Fachmann konnte daher nicht erwarten, dass Ferrocen in erfindungsgemässen Systemen auch flammhemmend wirkt. Tatsächlich tritt denn auch bei zu hoher Dosierung der erwartete umgekehrte Effekt der Verbrennungsförderung ein. Selbst nach Verlöschen der Flamme verbleibt in diesem Falle noch ein langes Nachglimmen. Auch in anderen Harzen, z.B. Epoxyharzen, wirkt ein Ferrocen-Zusatz nicht flammhemmend.

Die erfindungsgemässen Kunststoffe sind nicht nur schwerentflammbar sondern weisen auch hohe thermische Beständigkeiten von über 200 °C bis zu über 300 °C und sehr gute elektrische und mechanische Werte auf. Besonders überraschend ist es, dass auch nach längerer Temperung die flammhemmende Wirkung des Ferrocens trotz dessen hoher Flüchtigkeit nicht nachlässt.

Die flammhemmenden Eigenschaften sind besonders ausgeprägt bei solchen Kunststoffen, welche schwer oder nicht brennbare Verstärkungsfasern und/oder Füllstoffe enthalten. Besonders wirksam sind Zusatzstoffe, welche sich bei höherer Temperatur endotherm zersetzen. In diese Gruppe gehören Magnesiumhydroxid; Aluminiumhydroxid [$Al(OH)_3$]; Calcium-, Magnesium- und Bariumcarbonat und deren Mischverbindungen; sowie Gemische dieser Verbindungen.

Als Verstärkungsfasern besonders geeignet sind Glas-, quarz-, Kohlenstoff-Fasern, mineralische oder schwer brennbare synthetische Fasern, und zwar in den üblichen Formen als Kurzfaser, Stapelfaser, Faden,

Gewebe oder Matte.

Die erfindungsgemässen schwerentflammbaren Kunststoffe, welche wie gesagt auch hochtemperaturbeständig sind, werden durch Härtung der beschriebenen Harzmischungen, zweckmässigerweise bei Temperaturen von 80 bis 300 °C, vorzugsweise bei 130 bis 220 °C, erhalten.

Die Eigenschaften der so hergestellten Kunststoffe können durch übliche Zusatzstoffe auf bestimmte Anwendungen zugeschnitten werden. Von Bedeutung sind insbesondere:

- Weichmacher, insbesondere Phosphorverbindungen;
- Russ oder Graphit;
- Farbstoffe;
- Mikrohohlkugeln;
- Metallpulver, und
- sonstige Flammschutzadditive.

Zu letzterer Gruppe gehören z.B. roter Phosphor, Sauerstoffsäuren des Phosphors sowie deren anorganische und organische Salze, Borsäure und deren Salze.

Ferner können die Kunststoffe auch andere Kunstharze enthalten Von besonderem Interesse sind Modifikationen mit Epoxyharzen oder Phenolharz-Novolaken. Es ist besonders überraschend, dass selbst Modifikationen mit den wesentlich leichter brennbaren cycloaliphatischen Epoxyharzen in der erfindungsgemässen Abmischung unbrennbar werden. Anderseits sind gerade diese Modifikationen von besonderem Interesse, da sie sich durch besonders hohe Glasumwandlungstemperaturen auszeichnen.

Für die Verarbeitung eignen sich die für wärmehärtbare Duroplaste, wie Epoxyharze bekannten Verfahren, so z.B. Heisspressen von Prepregs oder SMCs (Sheet Molding Compounds); Pressen oder Spritzgiessen von Pressmassen; Giessen; Fasewickelverfahren; und Vakuumimprägnierung.

Schwerentflammbare Gegenstände aus den erfindungsgemässen Kunststoffen eignen sich für die verschiedensten Einsatzgebiete, so z.B. für Bauteile von Gebäuden, Möbeln, Maschinen oder Fahrzeugen; als Gehäuse, insbesondere für elektrische Geräte; als Isoliermaterial in elektrischen Anlagen, sowie als Basismaterial für gedruckte Schaltungen. Es können hierzu verstärkte und unverstärkte, gefüllte und ungefüllte Kunststoffe, sowie Schaumstoffe oder Kleber zum Einsatz kommen.

<u>Ausführungsbeispeile</u>

In den folgenden Beispielen werden folgende Ausgangsstoffe und Materialien verwendet:

<u>Oxazenharz 1</u>:

hergestellt durch Umsetzung von 4,4′-Diamino-diphenylmethan mit Phenol und Formaldehyd im Molverhältnis 1 : 2 : 4.

<u>Oxazenharz 2</u>:

hergestellt durch Umsetzung von Anilin mit Dihydroxy-diphenylmethan (Bisphenol F) und Formaldehyd im Molverhältnis 2 : 1 : 4.

<u>Oxazenharz 3</u>:

hergestellt durch Umsetzung von p-Diamino-benzol mit Phenol und Formaldehyd im Molverhältnis 1 : 2 : 4.

<u>Oxazenharz 4</u>:

hergestellt durch Umsetzung von Anilin mit einem trifunktionellen Novolak und Formaldehyd im Äquivalentverhältnis $NH_2$ : OH : $CH_2OH$ = 1 : 1 : 2.

<u>Oxazenharz 5</u>:

hergestellt durch Umsetzung von Anilin mit einem trifunktionellen Novolak und Formaldehyd im Äquivalentverhältnis $NH_2$ : OH : $CH_2OH$ = 1 : 0,8 : 1,6.

Epoxid-Verbindung 1:

Flüssiger Bisphenol-A-glycidylether, Epoxid-Äquivalentgewicht = 200 (Handelsbezeichnung "Epikote 828").

Epoxid-Verbindung 2:

3,4-Epoxy-cyclohexylmethyl-3,4-epoxy-cyclohexan-carboxylat (Handelsbezeichnung "Araldit CY 179").

Aluminiumhydroxid (Aluminiumoxidtrihydrat = ATH)

$Al(OH)_3$, mittlere Teilchengrösse 0,0008 mm.

Glasgewebe 1:

290 g/m$^2$, Fadendichte/cm = 7x7, Epoxysilan-Finish.

Glasgewebe 2

110 g/m$^2$, Fadendichte/cm = 24x24, Epoxysilan-Finish.

Zur Herstellung der Prüfplatten wurden die Harzmischungen zwischen teflonisierten Glasplatten 2 Stunden bei 200 °C gehärtet. Bei den glasgewebehaltigen Proben wurden zunächst die Glasgewebe mit der Harzmischung im Vakuum bei 120 °C imprägniert und dann zwischen den Glasplatten gehärtet.

Die Brennbarkeit wurde nach der Vorschrift "UL 94 Vertikaltest" geprüft. Die Glasumwandlungtemperatur wurde durch calorimetrische Messung (DSC) ermittelt.

Beispiele 1 bis 17

Die Mischungen wurden mit Ferrocen angesetzt. In Tabelle 1 sind die Zusammensetzungen und die Ergebnisse der Flammtests zusammengestellt. Alle Proben wurden 2 h bei 200 °C gehärtet.

An dem Laminat von Beispiel 3 wurden folgende Eigenschaften ermittelt:

| | | |
|---|---|---|
| Spezifischer Durchgangswiderstand | | |
| nach Härtung | $3 \cdot 10^{16}$ | Ohm·cm |
| nach Feuchtlagerung | $1{,}5 \cdot 10^{14}$ | Ohm·cm |
| Spezifischer Oberflächenwiderstand | | |
| nach Härtung | $1{,}3 \cdot 10^{15}$ | Ohm |
| nach Feuchtlagerung | $6{,}5 \cdot 10^{11}$ | Ohm |
| Durchschlagsfestigkeit | 31 | kV/mm. |

Das Laminat von Beispiel 4 hatte eine Glasumwandlungstemperatur von 170 °C. Nach einer Temperung von 24 h bei 220 °C stieg diese auf 197 °C. Die Brenndauer der getemperten Probe lag bei 5 s und entsprach der Brandklasse UL 94-V0. Die Biegeprüfung ergab:

| | vor der Temperung | nach der Temperung |
|---|---|---|
| Bruchfestigkeit | 466 $N/mm^2$ | 460 $N/mm^2$ |
| Randfaserdehnung | 2,7 % | 2,6 % |
| E-Modul | 21,5 $kN/mm^2$ | 19,3 $kN/mm^2$ |

In den Beispielen 15 und 16 wurden die Harzmischungen zunächst in Benzen gelöst und mit der Lösung das Glasgewebe imprägniert und getrocknet. Das Prepreg wurde in einer Heizpresse zu den Laminaten verpresst und 1 h bei 220 °C gehärtet. Das Oxazenharz 4 für Beispiel 15 wurde vorgängig durch 3stündiges Erhitzen auf 130 °C vorpolymerisiert.

Beispiele 18 bis 22

Diese Beispiele wurden mit Oxazenharz 1 und je 2 Gew.-% der verschiedenen Metallverbindungen angesetzt. Es wurden wie oben beschriebenen Laminate mit 10 Lagen Glasgewebe 2 hergestellt. Die Ergebnisse sind in Tabelle 2 zusammengestellt.

Beispiel 23

Eine Mischung von Oxazenharz 1 mit 2 Gew.-% Cyclopentadienyl-tricarbonyl-molybdän-dimer wurde in einer offenen Schale 1 h bei 200°C gehärtet. Es entstand eine leicht aufgeschäumte Platte mit einer Dichte von 0,22 $g/cm^3$. Die 7 mm dicke Probe ergab im Flammtest eine mittlere Brenndauer von 15 s, entsprechend der Klasse UL 94-V1.

Tabelle 1

| Beispiel Nr. | Vergl. 1 | Vergl. 2 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|---|
| Zusammensetzung | | | | | | | | | | | | | | | | | | | |
| Ferrocen % | - | | 0,5 | 1 | 2 | 2 | 5 | 5 | 2 | 2 | 2 | 1 | 1 | 1 | 2 | 1 | 2 | 2 | 2 |
| Oxazenharz Nr. | 1 | 1 | 1 | 1 | 1 | 1 | 1 | 2 | 1 | 1 | 1 | 1 | 1 | 1 | 1 | 3 | 4 | 5 | 1 |
| Oxazenharz % | 100 | 70 | 99,5 | 99 | 98 | 98 | 95 | 95 | 48 | 78 | 88 | 89 | 79 | 79 | 38 | 79 | 78 | 78 | 38 |
| EP-Harz Nr. | | 1 | - | - | - | | | | | | | | | | 2 | | | | 1 |
| EP-harz % | - | 30 | - | - | - | | | | | | | | | | 30 | | | | 30 |
| ATH | | | - | - | - | | | | | 20 | 10 | 10 | 20 | 20 | 30 | 20 | 20 | 20 | 30 |
| Quarzmehl | | | - | - | - | | | | 50 | | | | | | | | | | |
| Lagen Glasgew. 1 | | | - | - | - | | | | | | | | 3 | 1 | 4 | 1 | | | |
| Lagen Glasgew. 2 | 10 | 10 | 9 | 9 | 10 | 9 | 9 | 10 | | | | | | | | | 9 | 9 | 10 |
| Flammtest UL 94 | | | | | | | | | | | | | | | | | | | |
| Dicke mm | 1,2 | 1,2 | 0,8 | 1 | 1,2 | 0,9 | 0,9 | 1,2 | 1,2 | 1,9 | 1,8 | 1,9 | 1 | 0,13 | 1,3 | 0,9 | 1 | 1 | 1,8 |
| mittlere Brenndauer s | bis oben | bis oben | 13 | 1 | 0 | 4 | 3 | 4 | 5 | 0 | 0 | 2 | 0 | 3 | 4 | 1 | 4 | 0 | 0 |
| Klassifizierung | ungnd. | ungnd. | V 1 | V 0 | V 0 | V 0 | V 0 | V 0 | V 0 | V 0 | V 0 | V 0 | V 0 | V 0 | V 0 | V 0 | V 0 | V 0 | V0 |

Tabelle 2

| | | Flammtest UL 94 | | |
|---|---|---|---|---|
| Beisp. Nr. | Metallverbindung | Dicke mm | Brenndauer s | Klassifiz. |
| 18 | Kupfer-phthalocyanin | 1,2 | 13 | V 1 |
| 19 | Triphenylantimon | 1 | 8 | V 1 |
| 20 | Chrom-III-acetylacetonat | 1,1 | 18 | V 1 |
| 21 | Mangan-acetylacetonat | 1,3 | 13 | V 1 |
| 22 | Methylcyclopentadienyl-tricarbonyl-mangan | 1,1 | 14 | V 1 |

## Patentansprüche

1. Zu schwerentflammbaren Kunststoffen härtbare Harzmischungen, bestehend aus einer Harzkomponente, welche mindestens eine thermisch härtbare 1-Oxa-3-aza-tetralin-Gruppen enthaltende Verbindung enthält oder aus einer solchen besteht, dadurch gekennzeichnet, dass sie eine organische Metall- bzw. Halbmetall-Verbindung oder Kohlenmonoxid-Komplexverbindung eines Elementes der 6., 7. oder 8. Nebengruppe des periodischen Systems oder des Kupfers, Antimons oder Wismuts enthalten.

2. Harzmischungen nach Anspruch 1, dadurch gekennzeichnet, dass sie eine Verbindung des Kupfers, Mangans, Chroms, Eisens oder Antimons enthalten.

3. Harzmischungen nach Anspruch 2, dadurch gekennzeichnet, dass sie eine Verbindung des Eisens enthalten.

4. Harzmischungen nach einem der Ansprüche 1 bis 3, dadurch gekennzeichnet, dass sie als organische Metall- bzw. Halbmetall-Verbindungen solche mit Metall- bzw. Halbmetall-Kohlenstoff-Bindungen enthalten.

5. Harzmischungen nach Anspruch 4, dadurch gekennzeichnet, dass sie Alkyl-, Aryl-, Aralkyl-, Alkenyl- oder Alkinyl-Verbindungen; Enolate, insbesondere Acetylacetonate; oder die Metall-bzw. Halbmetall-Verbindungen des Acetessigesters enthalten.

6. Harzmischungen nach einem der Ansprüche 1 bis 3, dadurch gekennzeichnet, dass sie als organische Metall- bzw. Halbmetall-Verbindungen solche mit Metall- bzw. Halbmetall-Stickstoff- oder Phosphor-Bindungen enthalten.

7. Harzmischungen nach Anspruch 6, dadurch gekennzeichnet, dass sie Porphine, Porphyrine oder Phthalocyanine enthalten.

8. Harzmischungen nach einem der Ansprüche 1 bis 3, dadurch gekennzeichnet, dass sie komplexe Metall- bzw. Halbmetall-Verbindungen von cyclischen konjugierten Polyenen oder Polyenylresten mit nicht lokalisierten Elektronenpaaren enthalten.

9. Harzmischungen nach Anspruch 8, dadurch gekennzeichnet, dass sie Cyclopentadienyl-Verbindungen enthalten, deren Cyclopentadienylreste gegebenenfalls substituiert sind oder teilweise durch andere komplexbildende organische Reste oder Kohlenmonoxid ersetzt sind.

10. Harzmischungen nach den Ansprüchen 3 und 9, dadurch gekennzeichnet, dass sie Ferrocen [Bis(eta-cyclopentadienyl)eisen] enthalten.

11. Harzmischungen nach Anspruch 2, dadurch gekennzeichnet, dass sie 0,1 bis 20 Gew.-%, vorzugsweise 0,5 bis 10 Gew.-%, insbesondere weniger als 5 Gew.-%, bezogen auf den Harzgehalt, der Metall- bzw. Halbmetall-Verbindung enthalten.

12. Harzmischungen nach einem oder mehreren der Ansprüche 1 bis 11, dadurch gekennzeichnet, dass sie bis zu 50 Gew.-%, bezogen auf den Harzgehalt, eines weiteren Harzes, insbesondere eines Epoxyharzes oder Phenolnovolakharzes, enthalten.

13. Harzmischungen nach einem oder mehreren der Ansprüche 1 bis 12, dadurch gekennzeichnet, dass sie ausserdem schwer oder nicht brennbare Verstärkungsfasern und/oder Füllstoffe enthalten.

14. Harzmischungen nach Anspruch 13, dadurch gekennzeichnet, dass sie als Verstärkungsfasern Glas-, Quarz-, Kohlenstoff-Fasern oder mineralische oder schwer brennbare synthetische Fasern, insbesondere in Form von Kurzfasern, Stapelfasern, Fäden, Geweben oder Matten, enthalten.

15. Harzmischungen nach Anspruch 13, dadurch gekennzeichnet, dass dass sie als Füllstoffe Magnesiumhydroxid; Aluminiumhydroxid [$Al(OH)_3$]; Calcium-, Magnesium- oder Bariumcarbonat oder deren Mischverbindungen; oder Gemische dieser Verbindungen enthalten.

**16.** Harzmischungen nach Anspruch 13 oder 14, dadurch gekennzeichnet, dass sie 5 bis 80 Gew.-% der Verstärkungsfasern enthalten.

**17.** Harzmischungen nach Anspruch 13 oder 15, dadurch gekennzeichnet, dass sie 5 bis 80 Gew.-%, vorzugsweise 10 bis 60 Gew.-%, insbesondere weniger als 40 Gew.-%, der Füllstoffe enthalten.

**18.** Harzmischungen nach einem oder mehreren der Ansprüche 1 bis 17, dadurch gekennzeichnet, dass sie eine 1-Oxa-3-aza-tetralin-Gruppen enhaltende Verbindung enthalten, wie sie durch Umsetzung von Phenol mit einem aromatischen Amin, insbesondere einem Phenylendiamin oder einem Diaminodiphenylmethan, und mit Formaldehyd erhältlich ist.

**19.** Harzmischungen nach einem oder mehreren der Ansprüche 1 bis 17, dadurch gekennzeichnet, dass sie eine 1-Oxa-3-aza-tetralin-Gruppen enhaltende Verbindung enthalten, wie sie durch Umsetzung eines Dihydroxydiphenylmethans, eines Dihydroxybenzols oder eines Novolaks mit Anilin und mit Formaldehyd erhältlich ist.

**20.** Verfahren zur Herstellung von schwerentflammbaren Kunststoffen, dadurch gekennzeichnet, dass man eine Harzmischung nach Anspruch 1 härtet.

**21.** Verfahren nach Anspruch 20, dadurch gekennzeichnet, dass man eine Harzmischung nach einem oder mehreren der Ansprüche 2 bis 19 härtet.

**22.** Verfahren nach Anspruch 20 oder 21, dadurch gekennzeichnet, dass man die Harzmischung bei 80 bis 300 °C, vorzugsweise bei 130 bis 220 °C, härtet.

**23.** Verfahren nach einem der Ansprüche 20 bis 22, dadurch gekennzeichnet, dass man die Harzkomponente oder die Harzmischung vor der Aushärtung einer Vorpolymerisation unterwirft, derart, dass die Viskosität erhöht aber der Gelzustand noch nicht erreicht wird.

**24.** Anwendung des Verfahrens nach einem der Ansprüche 20 bis 23 zur Herstellung von schwerentflammbaren Kunststoffartikeln, dadurch gekennzeichnet, dass man die Harzmischung durch Heisspressen von Prepregs oder SMCs (Sheet Molding Compounds); durch Pressen oder Spritzpressen von Pressmassen; Giessen; nach Faserwickelverfahren; oder durch Vakuumimprägnierung verarbeitet.

**25.** Schwerentflammbarer Kunststoffartikel, hergestellt nach dem Verfahren nach Anspruch 20.

**26.** Schwerentflammbarer Kunststoffartikel nach Anspruch 25, hergestellt nach dem Verfahren nach einem der Ansprüche 21 bis 23.

**27.** Prepreg zur Ausführung des Verfahrens nach einem der Ansprüche 20 bis 23, enthaltend eine Harzmischung nach einem oder mehreren der Ansprüche 1 bis 19.

**28.** Pressmasse zur Ausführung des Verfahrens nach einem der Ansprüche 20 bis 23, enthaltend eine Harzmischung nach einem oder mehreren der Ansprüche 1 bis 19.

Europäisches Patentamt

EUROPÄISCHER RECHERCHENBERICHT

Nummer der Anmeldung

EP 91 81 0867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 433 851 (GURIT-ESSEX)<br>* Seite 16, Zeile 12 - Zeile 21; Ansprüche * | 1 | C08K5/00<br>C08K5/09<br>C08L61/34 |
| A | EP-A-0 149 987 (MONSANTO COMPANY)<br>* Seite 16, Zeile 29 - Seite 17, Zeile 32 *<br>* Seite 19, Zeile 11 - Zeile 17; Ansprüche * | 1 | |
| A | EP-A-0 356 379 (GURIT-ESSEX AG)<br>* Ansprüche * | 1 | |
| A | US-A-2 876 208 (MARGUERITE NAPS)<br>* Ansprüche * | 1 | |

RECHERCHIERTE SACHGEBIETE (Int. Cl.5)

C08L
C08K

Der vorliegende Recherchenbericht wurde für alle Patentansprüche erstellt

| Recherchenort | Abschlußdatum der Recherche | Prüfer |
|---|---|---|
| DEN HAAG | 20 MAERZ 1992 | DE LOS ARCOS Y E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)